# FASCICULE DE BREVET EUROPEEN

(11) **EP 2 926 201 B1**
(45) Date de publication et mention de la délivrance du brevet: **03.03.2021**
(21) Numéro de dépôt: 13795216.4
(22) Date de dépôt: 20.11.2013
(51) Int. Cl.: G04F 13/02

(54) **DISPOSITIF DE CHRONO-DATATION OPTIQUE, SYSTÈME DE PRISE DE VUES ET PROCÉDÉ DE CHRONO-DATATION OPTIQUE ASSOCIÉS**
VORRICHTUNG FÜR OPTISCHE ZEITSTEMPELUNG UND ZUGEHÖRIGES BILDAUFNAHMESYSTEM SOWIE OPTISCHES ZEITSTEMPELVERFAHREN
DEVICE FOR OPTICAL TIME-STAMPING, AND RELATED IMAGE-SENSING SYSTEM AND OPTICAL TIME-STAMPING METHOD

(30) Priorité: 30.11.2012 FR 1261504
(43) Date de publication de la demande: 07.10.2015
(73) Titulaire: Centre National d'Etudes Spatiales, 75001 Paris (FR)
(72) Inventeur: PRADO, Jean-Yves, F-31120 Portet sur Garonne (FR)
(74) Mandataire: Delorme, Nicolas
(86) Numéro de dépôt international: PCT/EP2013/074303
(87) Numéro de publication internationale: WO 2014/082907

(56) Documents cités:
- EP-A1- 0 549 436
- JP-A- H01 216 328
- US-A- 3 386 364

## Description

La présente invention concerne un dispositif de chrono-datation optique, comprenant :
- un instrument optique ayant une rétine présentant un champ de vue et étant propre à réaliser sur la rétine des prises de vue dudit champ de vue, et
- un récepteur d'un signal d'horloge de référence de précision élevée.

Le domaine de l'invention est relatif à la chrono-datation optique de prises de vue.

On connait par exemple documents EP 0 549 436 A1 ou JP H01 216328 A décrivant un dispositif pour la réalisation de prises de vue d'une ligne d'arrivée des parcours de compétitions sportives.

US 3 386 364 A décrit un dispositif de chrono-datation optique comprenant une caméra dont l'ouverture de l'obturateur est temporisée de façon synchronisée avec des impulsions 1pps reçues par un satellite. Ce document couvre le préambule de la revendication 1 annexée.

Dans certaines applications, par exemple dans le domaine de l'astronomie amateur, il est intéressant de déterminer avec précision l'instant d'occurrence d'un phénomène observable rapporté à un temps de référence, par exemple pour ensuite mettre en corrélation les prises de vue réalisées à partir de différentes positions géographiques et obtenir des informations précises sur ce phénomène.

Dans ce scénario, l'instrument optique correspond par exemple à une caméra ou à un photomètre destinés à réaliser des prises de vue d'une éclipse d'un astre par un autre.

Pour la datation des prises de vue, il est notamment connu de doter le dispositif d'un boîtier électronique raccordé à la sortie de l'instrument optique et propre à incruster, sur les données transmises par l'instrument optique, une date représentative du temps de référence fourni par le récepteur.

Ceci est par exemple décrit dans le document IOTA Observer's Manual publié sur le site de l'association IOTA, qui est l'acronyme de « International Occultation Timing Association ». Ce document est également disponible avec le numéro de publication XP007922188.

Dans ce document, le signal d'horloge de référence est le signal de temps GPS, qui constitue un temps de référence universel.

Le récepteur de temps de référence transmet alors au boîtier électronique un signal à une pulsation par seconde en temps de référence, également connu sous le nom de signal 1pps, chaque pulsation donnant lieu à une synchronisation de l'horloge interne du dispositif électronique avec le temps de référence.

La date indiquée par l'horloge interne du boîtier est ensuite ajoutée en surimpression sur les données issues de l'instrument optique.

Le boîtier délivre alors en sortie un flux vidéo propre à être visualisé sur un écran et correspondant aux prises de vue de l'instrument optique sur lesquelles la date de l'horloge interne du boîtier électronique est affichée en incrustation.

Toutefois, ce dispositif présente un certain nombre d'inconvénients.

Tout d'abord, dans la mesure où le boîtier électronique est raccordé à la sortie de l'instrument optique, le boîtier électronique et l'instrument optique doivent être compatibles. Ainsi, ceux-ci doivent présenter une interface compatible, et le boîtier électronique doit être apte à lire le format des données vidéo délivrées par l'instrument optique.

En outre, le flux vidéo délivré par le boîtier électronique présente lui-même un format donné, ce qui induit à nouveau des problèmes de compatibilité du flux vidéo délivré avec des appareils d'enregistrement ou de lecture.

Enfin, la datation des prises de vue impose de disposer de moyens de visualisation et d'enregistrement du flux vidéo sortant du boîtier électronique, et donc de disposer d'un matériel encombrant incompatible avec les conditions dans lesquelles les prises de vue sont généralement réalisées.

L'un des objets de l'invention est donc de proposer un dispositif de datation optique qui ne présente pas ces inconvénients.

A cet effet, l'invention concerne un dispositif de chrono-datation optique conformément à la revendication 1.

Selon d'autres aspects de l'invention, le dispositif comprend une ou plusieurs des caractéristiques techniques des revendications 2 à 10, prise(s) isolément ou selon toute(s) combinaison(s) techniquement possible(s).

L'invention concerne également un système de prise de vues comprenant au moins deux dispositifs de chrono-datation optique tels que décrits ci-dessus.

L'invention concerne également un procédé de chrono-datation optique conformément à la revendication 12

Selon d'autres aspects de l'invention, le procédé comprend une ou plusieurs des caractéristiques techniques des revendications 13 à 16, prise(s) isolément ou selon toute(s) combinaison(s) techniquement possible(s).

L'invention sera mieux comprise à la lecture de la description détaillée qui va suivre, donné uniquement à titre d'exemple et faite en référence aux Figures annexées, sur lesquelles :
- la Figure 1 est une représentation schématique d'une vue du dessus d'un dispositif de chrono-datation selon l'invention ;
- la Figure 2 est un diagramme-bloc d'un procédé de chrono-datation optique selon l'invention ;
- la Figure 3 est une représentation schématique de prises de vue prises par plusieurs dispositifs selon l'invention au cours du procédé selon une variante de l'invention ;
- la Figure 4 est une représentation schématique de la forme d'un signal lumineux émis par une source d'éclairage d'un ou plusieurs dispositifs selon l'invention dans une variante du procédé de la Figure 2,
- la Figure 5 est une représentation schématique de prises de vue prises par un dispositif selon l'invention au cours d'une variante du procédé de la Figure 2 ;
- la Figure 6 est une représentation schématique d'un système de prise de vue selon l'invention ;
- la Figure 7 est une représentation schématique d'un dispositif selon une variante de l'invention lors d'une étape d'une variante du procédé de la Figure 2 ;
- la Figure 8 est une illustration d'un procédé selon une variante de l'invention ; et
- la Figure 9 est un diagramme-bloc illustrant un procédé selon une variante de l'invention.

Le dispositif de chrono-datation optique selon l'invention est destiné à permettre la chrono-datation en temps de référence d'un phénomène observable, comme par exemple une éclipse d'un astre par un autre, la rentrée de débris ou de météores dans l'atmosphère terrestre ou un phénomène spécifique lors d'orages atmosphériques (sprites, elves, blue jets, etc.),

Le dispositif constitue également un moyen d'étalonnage et de vérification d'un système complexe de prises de vue, par exemple un ou plusieurs télescopes ou photomètres au sol ou embarqués.

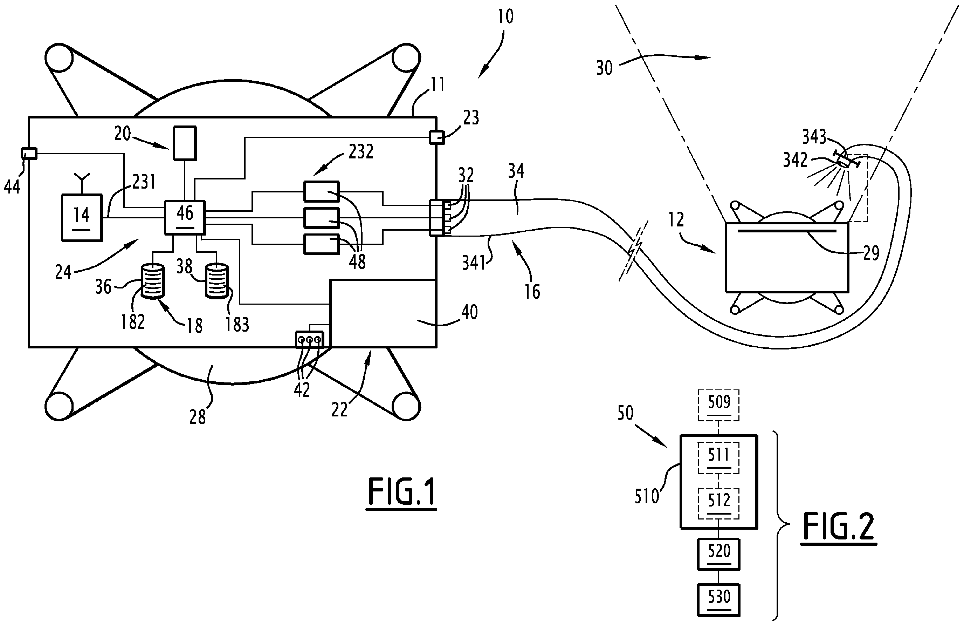

En référence à la Figure 1, le dispositif de chrono-datation optique 10, ci-après dispositif 10, comprend un boîtier 11, un instrument optique 12, un récepteur d'un signal d'horloge de référence 14 et une source d'éclairage 16. En outre, le dispositif 10 comprend des moyens de stockage de données 18, des moyens d'alimentation 20 en énergie électrique et une interface externe 22. Enfin, le dispositif 10 comprend une sortie auxiliaire 23, des moyens de commande 24 et un pied de stabilisation 28 sur lequel le boîtier 11 est fixé.

Le boîtier 11 est propre à contenir, supporter et protéger certains des organes du dispositif 10. Au moins le récepteur 14 et les moyens de commande 24 sont contenus dans le boîtier 11.

Le boîtier 11 présente une forme générale parallélépipédique, et présente ainsi deux faces latérales, une face avant, une face arrière, une face supérieure, et une face inférieure.

Le boîtier 11 est par exemple réalisé en polycarbonate.

Le boîtier 11 présente une longueur comprise entre 150 mm et 200 mm, et de préférence égale à 200 mm, une largeur comprise entre 50 mm et 80 mm, et de préférence sensiblement égale à 80 mm, et une hauteur comprise entre 10 mm et 30 mm, et de préférence égale à 30 mm.

Le boîtier 11 présente une masse comprise entre 50 g et 100 g.

Le boîtier 11 est indépendant de l'instrument optique 12, c'est-à-dire qu'il n'est ni raccordé ni solidaire en mouvement de l'instrument optique 12. En variante, le boîtier 11 est solidaire en mouvement de l'instrument optique 12 mais n'est pas raccordé électriquement à l'instrument optique 12.

L'instrument optique 12 comprend une rétine 29 présentant un champ de vue 30. L'instrument optique 12 est propre à réaliser des prises de vue de son champ de vue 30 sur la rétine 29 de façon séquentielle à une fréquence f donnée. Les prises de vue réalisées sont stockées par l'instrument optique 12, par exemple sur une pellicule ou sur une carte mémoire numérique de stockage.

Dans l'exemple de la Figure 1, l'instrument optique 12 est une caméra pour l'observation du domaine visible munie d'un pied de stabilisation. La rétine 29 se présente par exemple sous la forme d'un ou plusieurs capteurs photographiques tels que des capteurs CCD, qui vient de l'anglais « Charge-Coupled Device » et qui signifie dispositif à transfert de charge.

Par exemple, la caméra présente une fréquence f de prise de vue de 50 images par seconde, ce qui correspond au standard PAL. En variante, cette fréquence f vaut 60 images par seconde, ce qui correspond au format NTSC. En variante encore, la fréquence f peut être supérieure à 60 images par seconde, ce qui est le cas par exemple lorsque l'instrument optique 12 est numérique.

De manière connue, une prise de vue réalisée par l'instrument optique 12 correspond au résultat de l'accumulation des photons se déplaçant dans le champ de vue en direction de la rétine 29 de l'instrument optique 12 sur une durée sensiblement égale à 1/f.

La disposition spatiale des objets visualisables dans le champ de vue est alors conservée sur les prises de vue.

En variante, l'instrument optique 12 est un photomètre.

En variante, l'instrument optique 12 est un élément quelconque du groupe formé par: une caméra pour l'observation du domaine visible, une caméra infrarouge, un photomètre.

En variante, le dispositif 10 comprend plusieurs instruments optiques 12. Les instruments optiques 12 d'un tel dispositif 10 sont respectivement compris dans le groupe formé par: une caméra pour l'observation du domaine visible, une caméra infrarouge, un photomètre.

Dans cette variante, la source d'éclairage 16 est propre à émettre un signal lumineux en direction de la rétine 29 d'au moins l'un des instruments optiques 12 et dans le champ de vue correspondant. Ceci est décrit plus en détail dans ce qui suit.

L'instrument optique 12 dispose d'un temps propre déterminé par une horloge interne qu'il comporte. Les prises de vue que l'instrument optique 12 réalise sont datées en temps propre de l'instrument optique 12.

Le récepteur d'un signal d'horloge de référence 14, ci-après récepteur 14, est contenu dans le boîtier 11 et est propre à recevoir des informations d'un temps de référence et à délivrer aux moyens de commande 24 un signal synchronisé avec les informations de temps de référence reçues.

Dans l'exemple de la Figure 1, le temps de référence est le temps GPS, et le récepteur 14 est un récepteur GPS propre à capter les informations de temps émises par les satellites correspondants. En variante, le récepteur 14 est un récepteur GLONASS ou un récepteur GALILEO et le temps de référence est le temps GLONASS ou GALILEO.

Les informations de temps du récepteur 14 présentent une précision de l'ordre de 10⁻⁹ s. Le signal délivré par le récepteur 14 aux moyens de commande 24 est par exemple signal dit 1pps, pour « 1 pulse per second », (qui vient de l'anglais et signifie « une impulsion par seconde »), une impulsion du signal étant émise à chaque nouvelle seconde en temps de référence.

Comme on le verra par la suite, chaque nouvelle impulsion du signal 1 pps donne lieu à un recalage de l'horloge interne des moyens de commande avec le signal 1pps et donc le temps de référence, de telle sorte que les moyens de commande soient synchronisés avec le temps de référence.

La source d'éclairage 16 est propre à émettre un signal lumineux réglable en intensité, longueur d'onde et largeur d'impulsion (c'est-à-dire en durée) en direction de la rétine de l'instrument optique 12 et dans le champ de vue 30 de l'instrument optique 12.

Par « lumineux », on entend visible ou infrarouge.

La source d'éclairage 16 est distante de la rétine 29 de l'instrument optique 12.

Le signal lumineux émis se situe dans une portion du spectre électromagnétique que la rétine 29 de l'instrument optique 12 est apte à détecter.

La source d'éclairage 16 comprend trois sources lumineuses 32 monochromatiques propres à émettre un rayonnement lumineux respectif et un guide d'onde 34.

Les trois sources lumineuses 32 sont respectivement une diode électroluminescente, DEL dans ce qui suit, de couleur rouge à 625 nm, une DEL de couleur verte à 527 nm, et une DEL de couleur bleue à 470 nm.

Les sources lumineuses 32 sont disposées sur la face avant du boîtier 11, et sont fixées sur la paroi correspondante.

Le guide d'onde 34 est propre à permettre la propagation des photons émis par la source d'éclairage jusqu'au champ de vue 30 de l'instrument optique 12 et en direction de la rétine 29, ainsi qu'à combiner les rayonnements lumineux respectivement émis par les sources lumineuses 32, de sorte que le signal lumineux résultant est ainsi réglable en longueur d'onde.

Le guide d'onde 34 présente une première extrémité 341 raccordée à la source d'éclairage 16, et une deuxième extrémité 342 déportée jusqu'au champ de vue 30 de l'instrument optique 12.

La deuxième extrémité 342 du guide d'onde 34 est disposée dans le champ de vue 30 de la rétine 29 de l'instrument optique 12 et est orientée en direction de la rétine 29. Par exemple, la deuxième extrémité 342 est disposée de sorte que les photons conduits par le guide d'onde 34 soient visualisables dans l'un des coins du champ de vue 30 de l'instrument optique 12.

En pratique, la deuxième extrémité 342 est immobilisée dans sa position par un moyen de fixation 343 orientable et rapporté au guide d'onde 34, par exemple un pied télescopique.

Le moyen de fixation est indépendant de l'instrument optique 12.

En variante, le moyen de fixation 343 est solidaire en mouvement de l'instrument optique de sorte que la position relative de la deuxième extrémité 342 et de la rétine 29 soit conservée lorsque la rétine 29 et le champ de vue 30 sont modifiés. Ceci est avantageusement mis en œuvre lorsque l'instrument optique est configuré pour faire défiler son champ de vue 30 lors de son fonctionnement.

Dans l'exemple de la Figure 1, le guide d'onde 34 est une fibre optique munie d'un mélangeur optique (non représenté) propre à combiner les rayonnements lumineux pour former le signal lumineux. Les photons issus de la source d'éclairage 16 et conduits par la fibre optique sont par suite visualisables dans le coin inférieur droit des prises de vue du champ de vue 30.

En variante, le guide d'onde 34 comprend trois fibres optiques accolées et respectivement associées à l'une des sources lumineuses. Le mélange des rayonnements lumineux des sources lumineuses a alors naturellement lieu au niveau de la deuxième extrémité 342.

Les moyens de stockage de données 18 se situent dans le boîtier 11 et comprennent une base de données d'impulsions 182 contenant des fichiers d'impulsions 36, et une base de données d'événements 183 contenant des fichiers d'événement 38.

Un fichier d'impulsions 36 se présente sous la forme d'un fichier texte contenant des informations codant la forme du rayonnement lumineux émis par chacune des sources lumineuses 32.

Un fichier d'impulsions 36 se présente par exemple sous la forme suivante :
$ 00 10 12 3C 5B #
$ 00 20 13 3C 59 #
$ 00 01 14 3C 57 #
$ 00 10 15 3C 55 #
$ 01 00 15 3C 53 #

Chaque ligne du fichier d'impulsions 36 spécifie une impulsion, c'est-à-dire à l'émission par les sources lumineuses 32 d'un rayonnement lumineux dans le champ de vue 30.

Les caractères $ et # codent respectivement le début et la fin de l'impulsion.

Les premiers octets codent la durée de l'impulsion et donc du rayonnement lumineux (en ms).

Les octets suivants codent respectivement la luminosité des DEL rouge, verte et bleue (la valeur de ces octets est comprise entre h00 et hFF).

Le nom du fichier se présente sous la forme suivante : « IXX.txt », où XX correspond au rang du fichier d'impulsions 36 dans la base de données d'impulsions 182, comme on va le voir.

Un fichier d'impulsion 36 est par exemple associé à une source lumineuse 32 donnée, ou encore à une forme de signal lumineux émis par la source d'éclairage 16 qui est particulière.

Comme on l'aura compris, toute forme d'onde peut ainsi être encodée dans un ou plusieurs fichiers d'impulsion 36, l'onde correspondante étant alors restituée par la ou les sources lumineuses 32 correspondantes lors du fonctionnement du dispositif 10, comme on le verra par la suite.

A noter qu'en fonction des conditions dans lesquelles le dispositif 10 est destiné à être utilisé, par exemple de nuit ou de jour, l'intensité des signaux lumineux prévue dans les fichiers d'impulsions 36 est adaptée en fonction de critères bien connus de l'homme du métier, et ce afin de limiter l'éblouissement de l'instrument optique 12.

Un fichier d'événements 38 se présente sous la forme d'un fichier texte contenant des trames codant un événement, c'est-à-dire l'émission par la source d'éclairage d'une séquence de rayonnements lumineux, à une date en temps de référence.

Un fichier d'événements 38 comprend une pluralité de trames, chaque trame présentant par exemple la forme suivante :
@ JJ MM AA HH MM SS XX TT £, où @ et £ codent respectivement le début et la fin de la trame, JJ, MM, AA, HH, MM, SS codent respectivement le jour du mois, le mois, l'année (20AA est sous-entendu), l'heure, la minute, et la seconde de l'événement, XX codant le rang d'un fichier d'impulsions 36 dans la base de données d'impulsion 182, et TT le nombre d'itérations du fichier d'impulsions 36 à réaliser lors de l'événement.

Ainsi, en prenant par exemple la trame « @ 22 06 12 22 05 00 01 10 £ », l'événement associé correspond à l'émission par la source d'éclairage 12, à 22h05 et 0 seconde, le 22 Juin 2012, de la séquence d'impulsions contenue dans le fichier d'impulsions l01.txt, et ce dix fois de suite.

Si la valeur TT est mise à zéro, la séquence d'impulsions est répétée à l'infini.

Le nom d'un fichier d'événements 38 se présente sous la forme EXXXX.txt. La base de données d'événements comprend également un fichier EEEEE.txt, dont la lecture par les moyens de commande 24 marque la fin d'un événement, comme on le verra par la suite.

Les fichiers d'impulsion 36 et d'événements 38 sont élaborés sur un ordinateur distinct et sont transférés dans les bases de données 182, 183, par exemple via l'interface externe 22.

Les moyens d'alimentation 20 sont propres à alimenter les organes du dispositif 10 en énergie électrique, à l'exception de l'instrument optique 12. Ils sont situés dans le boîtier 11.

Les moyens d'alimentation 20 comprennent quatre piles de 1,5 V. En variante, les moyens d'alimentation comprennent une batterie rechargeable.

A noter qu'en pratique, l'alimentation en énergie électrique des organes du dispositif 10 peut être réalisée par l'interface externe 22, comme on va le voir.

L'interface externe 22 est située dans une face du boîtier 11 et est propre à permettre la configuration du dispositif 10, la visualisation par l'opérateur du contenu des fichiers stockés dans les moyens de stockage 18, et le raccord du dispositif 10 à un ordinateur distant.

A cet effet, l'interface externe comprend un écran d'affichage numérique 40, une pluralité de boutons poussoirs 42, et une interface USB 44, qui vient de l'anglais « Universal Serial Bus ».

L'écran d'affichage numérique 40 est propre à réaliser l'affichage d'informations portant sur le dispositif 10, tels que l'état de verrouillage du signal de temps de référence, le nom du fichier ou des fichiers 36, 38 qui sont en cours d'exécution, des messages d'erreur, à permettre de basculer entre les fichiers en cours d'exécution, par exemple via les boutons poussoirs 42, réaliser l'affichage d'une information représentative de la quantité d'énergie électrique disponible dans les moyens d'alimentation 20, ou encore du contenu des fichiers stockés dans les moyens de stockage 18.

De manière connue, l'interface USB 44 permet le raccord du dispositif à un ordinateur. Ce raccord permet alors l'échange de fichiers entre le dispositif 10 et l'ordinateur, tel que le transfert vers le dispositif 10 et les moyens de stockage 18 de nouveaux fichiers d'impulsions 36 ou d'événements 38, ou encore la suppression de fichiers contenus dans les moyens de stockage 18.

A noter qu'il est préférable de ne pas autoriser la modification des fichiers d'impulsions 36 et d'événements 38 via l'écran d'affichage 40 pour des raisons qui seront rendues apparentes dans ce qui suit.

La sortie auxiliaire 23 est conçue pour le raccord d'une source lumineuse ponctuelle au dispositif 10, telle que par exemple une fibre optique. La sortie auxiliaire 23 se trouve sur la face avant du boîtier 11, et présente une interface mécanique pour la fixation de la source lumineuse ponctuelle.

Les moyens de commande 24 sont propres à commander la source d'éclairage 16 en fonction du contenu des fichiers d'impulsions 36 et des fichiers d'événements 38, à communiquer avec le récepteur de temps de référence 14, à piloter l'interface externe 22 et la sortie auxiliaire 23, et à accéder aux moyens de stockage 20.

A cet effet, les moyens de commande 24 comprennent un processeur 46 et trois convertisseurs numériques/analogiques 48, ci-après convertisseurs N/A 48.

Le processeur 46 est un circuit logique programmable FPGA, pour Field Programmable Gâte Array (qui vient de l'anglais et signifie « réseau de portes programmables »).

Le processeur 46 est raccordé au récepteur de temps de référence 14 via une première connexion 231, ainsi qu'à l'écran 40, à l'interface USB 44, à la sortie externe 23 et aux bases de données 182, 183.

En outre, il est raccordé électriquement aux convertisseurs N/A 48 qui sont eux-mêmes respectivement raccordés électriquement à l'une des sources lumineuses 32. Ces raccords électriques via les convertisseurs N/A 48 forment une deuxième connexion 232 raccordant les moyens de commande 24 à la source d'éclairage 16.

Comme indiqué précédemment, à partir du signal délivré par le récepteur 14, les moyens de commande 24 sont configurés pour cycliquement synchroniser leur horloge interne avec le temps de référence. Dans le cas d'un signal 1 pps, à chaque nouvelle impulsion du signal fourni par le récepteur 14, les moyens de commande 24 remettent à zéro les valeurs de l'horloge interne correspondant à des grandeurs inférieures à la seconde : les dixièmes de seconde, les centièmes de seconde, les millièmes de seconde, etc.

Pour la commande de la source d'éclairage 16, le processeur 46 est propre à lire séquentiellement les fichiers d'événements 38 et, pour chacune des trames, accéder au fichier d'impulsion 36 figurant dans la trame.

Le processeur 46 est alors programmé pour émettre, aux dates prise en temps propre synchronisé sur le temps de référence et prévues dans les fichiers d'événements 38, un signal numérique représentatif des données d'intensité et de durée lues dans les fichiers d'impulsion 36 à destination de chacun des convertisseurs N/A 48.

Pour le pilotage de la sortie auxiliaire 23, le processeur 46 est propre à émettre un signal de niveau logique haut lorsqu'il réalise la commande de la source d'éclairage 16, et un signal de niveau logique bas dans le cas contraire.

Dans l'exemple de la Figure 1, le signal émis par le processeur 46 est un signal TTL de niveau logique bas compris entre 0 V et 0,5 V, et de niveau logique haut compris entre 2,5 V et 5 V.

Les convertisseurs N/A 48 sont respectivement raccordés à l'une des sources lumineuses 32 et sont propres à transformer le signal numérique reçu du processeur 46 en un signal analogique de contenu équivalent et destiné à la source lumineuse 32 correspondante.

En variante, la source d'éclairage 16 comprend une unique source lumineuse 32 constituée d'une DEL polychromatique. Dans les fichiers d'impulsion 36, la couleur du rayonnement de la source lumineuse 32 est encodée sur plusieurs octets, sa luminosité étant encodée sur un ou plusieurs octets.

En variante encore, la source d'éclairage 16 ne comprend qu'une unique source lumineuse 32 constituée d'une DEL monochromatique, le signal optique n'étant réglable qu'en intensité et en largeur d'impulsion. De même manière que dans la variante décrite ci-dessus, le dispositif 10 ne comprend qu'un convertisseur N/A via lequel le processeur 46 est raccordé à la source d'éclairage 16, et les fichiers d'impulsions 36 sont codés en conséquence.

En variante encore, les informations relatives à l'instant d'émission des signaux lumineux et encodées dans les trames des fichiers d'événements 38 sont encodées directement dans les fichiers d'impulsions 36.

Chaque impulsion comprend un ou plusieurs octets correspondant à l'instant à laquelle l'impulsion est réalisée ainsi qu'au nombre d'itérations de l'impulsion.

Cette variante est avantageusement mise en œuvre lorsque l'application visée ne nécessite pas l'émission par la source d'éclairage 16 de signaux lumineux de forme complexe.

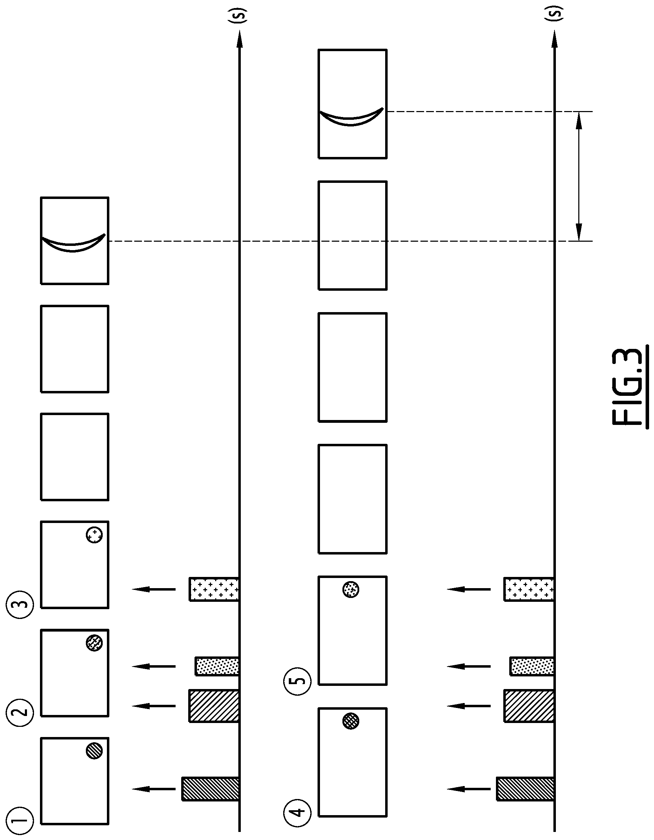

Le fonctionnement du dispositif 10 selon l'invention et le procédé de chrono-datation optique 50, ci-après procédé 50, selon l'invention vont maintenant être décrits en référence aux Figures 2 et 3.

Une fois le dispositif 10 mis en marche, les moyens de commande 24, et plus spécifiquement le processeur 46, réalisent la lecture séquentielle des fichiers d'événements 38 contenus dans la base de données d'événements 183. Le processeur 46 lit ensuite les fichiers d'impulsion 36. Le parcours des fichiers par le processeur 46 prend fin une fois le fichier EEEE.txt lu.

Les données lues sont chargées dans la mémoire du processeur 46. Aux dates contenues dans la mémoire du processeur - c'est-à-dire aux dates en temps de référence du fait du recalage cyclique de l'horloge interne du processeur avec le temps de référence-, le processeur émet des signaux numériques respectifs à destination des convertisseurs N/A 48. Chaque signal contient des informations de luminosité et de largeur d'impulsion du rayonnement lumineux à émettre par la source lumineuse correspondante. Ce signal numérique est converti en signal analogique par le convertisseur N/A 48 correspondant, puis envoyé à la source lumineuse 32 associée. Les sources lumineuses 32 émettent alors leur rayonnement lumineux d'une intensité et pour une durée correspondant aux informations encodées dans les fichiers 36, 38.

Le procédé 50 va maintenant être décrit dans le cadre d'un premier mode de réalisation. La mise en œuvre du premier mode de réalisation permet de dater en temps de référence un phénomène observable, par exemple une éclipse ou un phénomène météoritique.

Au cours d'une étape d'éclairage 510, on réalise l'émission d'un signal lumineux ou d'une séquence de signaux lumineux via la source d'éclairage 16 en direction de la rétine 29 de l'instrument optique 12 et dans le champ de vue 30 de l'instrument optique 12. Cette émission est par exemple réalisée quelques dizaines de secondes avant l'occurrence du phénomène. En pratique, pour certains types de phénomènes comme les éclipses, l'instant de l'occurrence du phénomène que l'on souhaite dater en temps de référence est connu *a priori* à la seconde près.

Avantageusement, au cours de l'étape d'éclairage 510, on réalise l'émission répétée d'un signal lumineux d'une durée fixe et/ou à une fréquence régulière, par exemple à une fréquence de l'ordre de la minute. Ceci est particulièrement avantageux lorsqu'il n'est pas possible d'estimer une date pour l'occurrence du phénomène absolu - ce qui est par exemple le cas lorsque le phénomène que l'on souhaite observer est de nature météoritique - et qu'il est préférable de minimiser le signal lumineux de la source d'éclairage afin de ne pas risquer de nuire à la qualité de l'observation en multipliant les signaux lumineux. En pratique, cette émission répétée est associée à un ou plusieurs fichiers d'impulsion 36 et/ou d'événements 38 dédié(s).

Au cours d'une étape de prise de vue 520 qui se déroule au moins partiellement concomitamment à l'étape d'éclairage 510 et pendant l'occurrence du phénomène que l'on souhaite observer, on réalise, via l'instrument optique 12, des prises de vue du champ de vue 30 dans lequel le phénomène observable se produit.

Ce critère de concomitance au moins partielle a pour conséquence que la trace d'un signal lumineux figure sur au moins l'une des prises de vue.

Les signaux lumineux émis par la source d'éclairage sont visualisables dans le champ de vue 30, et donc par suite sur les prises de vue réalisées au cours de cette étape de prise de vue 520.

Comme indiqué précédemment, une séquence de signaux lumineux est associée à un ou plusieurs fichiers d'événements 38 et/ou d'impulsion 36.

Aussi, avantageusement, au cours de l'étape d'éclairage 510, on bascule manuellement entre deux séquences de signaux lumineux distinctes. Ceci permet à un opérateur d'adapter la séquence de signaux lumineux lorsqu'il détecte le début du phénomène qu'il souhaite observer et dont il ne connaissait pas la date d'occurrence a *priori.* Ce basculement est par exemple réalisé via les boutons poussoirs 42 par lequel l'opérateur modifie la sélection du ou des fichiers d'impulsion 36 et/ou d'événements 38 en cours d'exécution.

En variante, ce basculement est réalisé automatiquement, par exemple au moyen d'un ordinateur raccordé au dispositif 10 via l'interface USB 44 et à l'instrument optique 12 et configuré pour commander au dispositif 10 le basculement entre des fichiers d'événements 38 préétablis en fonction de la variation de la luminosité des prises de vue réalisées par l'instrument optique 12 ou d'un mouvement se produisant dans le champ de vue 30.

La partie haute et la partie basse de la Figure 3 illustrent le déroulement des étapes d'éclairage 510 et de prise de vue 520.

Chaque rectangle représente schématiquement une prise de vue réalisée par l'instrument optique. Ces prises de vue sont réalisées à la fréquence f, cette fréquence étant fonction de l'instrument optique 12.

Sur cette Figure 3, les rectangles présentant des motifs correspondent à des prises de vue sur lesquelles un signal lumineux a été enregistré. La largeur des rectangles situés sous les prises de vue représente la durée du signal lumineux, la hauteur son intensité, et chaque motif correspond à une longueur d'onde donnée.

Sur la prise de vue 1, seul un signal lumineux est capturé.

Sur la prise de vue 2, dans la mesure où deux signaux lumineux de longueurs d'onde distinctes sont émis au cours de la durée 1/f correspondant à la prise de vue, la couleur visualisable sur cette prise de vue correspond à la somme des couleurs des deux signaux lumineux.

La partie basse de la Figure 3 est une vue analogue à celle de la partie haute, mais pour un instrument optique présentant une fréquence f de prise de vue différente (en l'occurrence plus faible).

Dès lors, pour une même séquence de signaux lumineux, les couleurs visualisables sur les prises de vue réalisées par ces instruments optiques 12 peuvent être différentes.

Au cours d'une étape de datation 530 du procédé, on détermine une date en temps de référence des prises de vue réalisées pendant l'étape de prise de vue 520. Comme on va le voir, ceci permet de dater en temps de référence l'occurrence du phénomène observable.

A partir de la connaissance de la date, de l'intensité, de la couleur et/ou de la durée des signaux lumineux émis au cours de l'étape d'éclairage 510, on détermine la date en temps de référence des différentes prises de vue sur lesquelles figurent dans le coin inférieur droit un signal lumineux.

Pour ce faire, en référence à la Figure 3, et en prenant par exemple les prises de vue 1 à 3, le signal lumineux visualisable sur la prise de vue 1 signifie que cette prise de vue s'est déroulée concomitamment à l'émission d'un premier signal lumineux, et qu'elle a été réalisée avant le début du signal suivant.

En analysant la prise de vue 2, on déduit que celle-ci s'est déroulée postérieurement à la fin du premier signal lumineux et que la date du début de sa période 1/f - c'est-à-dire du début de l'accumulation des photons qui donneront lieu à la prise de vue - est antérieure au début du signal suivant.

En analysant la prise de vue 3, on sait que celle-ci a débuté postérieurement à la date de fin du dernier signal lumineux réalisé, et qu'un seul signal lumineux a eu lieu pendant sa réalisation.

En recoupant ces informations, on détermine alors une date en temps de référence de ces prises de vue.

A partir de ces dates obtenues et de la donnée de la fréquence f de prise de vue de l'instrument optique 12, on détermine, à partir du nombre de prises de vue intercalées entre ces prises de vue datées et celles du phénomène observable, le laps de temps écoulé entre les prises de vue datées en temps de référence, et les prises de vue sur lesquelles le phénomène observable est visualisable.

On obtient ainsi la date en temps de référence du phénomène observable.

En pratique, en dépit de l'imprécision portant sur la fréquence f, une datation en temps de référence de l'occurrence du phénomène est obtenue à 10⁻⁶ près lorsque l'instrument optique 12 est une caméra, et jusqu'à 10⁻⁹ lorsque l'instrument optique 12 est un photomètre.

Avantageusement, au cours de l'étape d'éclairage 510, au moins certains des signaux émis par la source d'éclairage 16 sont émis à une longueur d'onde et une intensité ne variant pas au cours de l'émission, et présentent une largeur d'impulsion supérieure ou égale à 2/f. Ceci se traduit par le fait que le signal considéré est généralement visible sur trois prises de vue dont une au cours de l'intégralité de laquelle la source lumineuse 16 était en train d'émettre.

Ceci permet, par suite, de dater précisément ces trois prises de vue à partir de l'intensité du signal lumineux visualisable sur les deux prises de vue au cours desquelles le signal lumineux a débuté, respectivement pris fin. En effet, le rapport entre l'intensité du signal lumineux sur ces deux prises de vue permet de déterminer les fractions respectives de la durée 1/f des deux prises de vue pendant lesquelles le signal lumineux s'est produit.

Dans le dispositif selon l'invention, le marquage temporel en temps de référence des prises de vue étant réalisé au moyen de l'émission d'un signal lumineux émis en direction de la rétine de l'instrument optique 12, le boîtier 11 et l'instrument optique 12 sont rendus indépendants l'un de l'autre aussi bien mécaniquement qu'électriquement, et donc notamment du point de vue du format des données.

Ceci a pour effet de simplifier le dispositif requis pour réaliser une datation en temps de référence d'un phénomène observable et de faciliter sa mise en œuvre pour la datation d'un phénomène observable.

En variante du procédé 50, toujours en référence à la Figure 3, l'étape d'éclairage 510 comprend une première sous-étape 511 et une deuxième sous-étape 512 (représentées schématiquement en pointillés sur la Figure 3), au cours de chacune desquelles on réalise l'émission d'une séquence de signaux lumineux par la source d'éclairage 16 en direction de la rétine 29 de l'instrument optique 12 et dans son champ de vue 30.

La première sous-étape 511 se déroule préalablement à l'occurrence du phénomène observable, et la deuxième étape 512 se déroule postérieurement à la date d'occurrence prévue du phénomène.

Cette variante est avantageusement mise en œuvre afin de contrôler et compenser une éventuelle dérive de la fréquence f de prise de vue de l'instrument optique 12 au cours du temps.

En effet, certains types d'appareils à objectif sont sujets à des dérives de la fréquence f à laquelle ils réalisent des prises de vue, par exemple du fait de la température.

Dans le cadre de cette variante, au cours de l'étape de datation 530, on détermine la date en temps de référence des prises de vue postérieures à l'occurrence du phénomène observable, et l'on compare ces dates avec les dates attendues déduites à partir des dates en temps de référence des prises de vue issues de la première sous-étape 511 et de la connaissance de la fréquence f.

A partir de l'écart ainsi obtenu, on compense la date calculée des prises de vue sur lesquelles figurent l'événement observable, par exemple par interpolation linéaire. Ainsi, on applique à la date calculée l'écart affecté d'un facteur de pondération correspondant au rapport entre d'une part la durée intervenant entre la date de la dernière prise de vue résultant de la première étape d'éclairage 511 et la prise de vue sur laquelle figure le phénomène, et d'autre part la durée intervenant entre la date de la dernière prise de vue sur laquelle figure un signal lumineux résultant de la première étape d'éclairage 511 et la date de la première prise de vue sur laquelle figure un signal lumineux résultant de la deuxième étape d'éclairage 512.

En variante, l'instrument optique 12 est une caméra infrarouge.

Dans le cadre de cette variante, la source d'éclairage 16 comprend une ou plusieurs DEL propres à émettre un rayonnement dans la portion du domaine infrarouge que la rétine 29 de l'instrument optique 12 est propre à détecter.

Les moyens de commande 24 comprennent alors autant de convertisseurs 48 N/A que le dispositif 10 comprend de sources lumineuses.

En variante encore, l'instrument optique 12 est un photomètre.

De manière connue, un photomètre est destiné à la mesure de l'intensité du rayonnement d'un astre ou d'un phénomène dans une plage de longueurs d'onde donnée. Il est alors courant de coupler plusieurs photomètres présentant des plages de longueurs d'onde de travail complémentaires les unes des autres de façon à maximiser la portion du spectre électromagnétique dans laquelle le rayonnement du phénomène est observé.

Une prise de vue de photomètre réalise la sommation des photons dans son champ de vue 30 au cours de la durée 1/f pour déterminer l'intensité du rayonnement observé et ne conserve pas la disposition spatiale de ces photons. Le résultat des prises de vue réalisées par un photomètre se présente sous la forme d'un diagramme de représentation de la variation de l'intensité du rayonnement du phénomène observé en fonction du temps.

Dans le cadre de cette variante, la source d'éclairage 16 comprend au moins une source lumineuse 32 propre à émettre un rayonnement dans la plage de longueurs d'onde de l'instrument optique 12.

Lorsque le procédé de datation 50 mis en oeuvre au moyen d'un dispositif 10 selon cette variante de l'invention, et dans la mesure où la plage de longueurs d'onde d'un photomètre peut être étroite, au cours de l'étape d'éclairage 510, on réalise préférentiellement la modulation du signal de la source lumineuse 16 en intensité plutôt qu'en longueur d'onde.

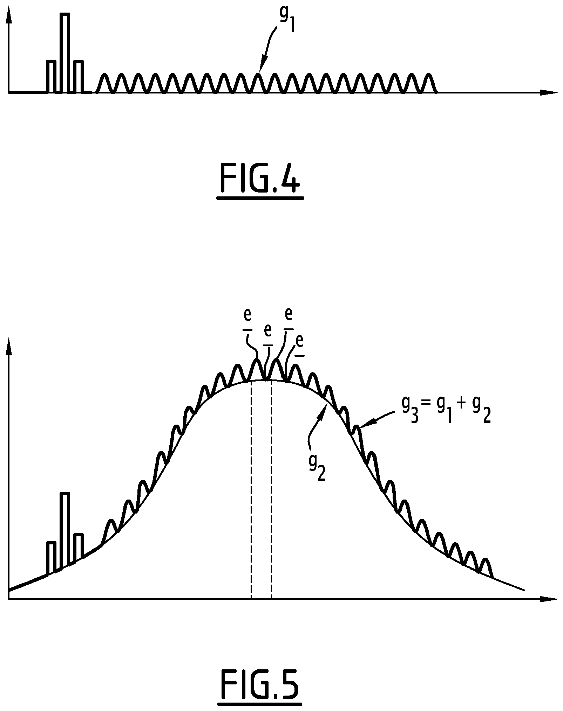

La Figure 4 fournit, à titre d'exemple, une courbe g1 de la variation en fonction du temps de l'intensité du signal émis par une source d'éclairage 16 lors de l'étape d'éclairage 510 du procédé de chrono-datation 50 selon cette variante de l'invention.

La Figure 5 illustre d'une part une courbe g₂ d'exemple de la variation en fonction du temps de l'intensité du rayonnement du phénomène observable qui serait obtenue par le photomètre en l'absence de signal lumineux de la part de la source d'éclairage 16, et d'autre part une courbe g₃ de la variation en fonction du temps de l'intensité du rayonnement du phénomène obtenue pour l'émission par la source d'éclairage 16 de la séquence de signaux lumineux de la Figure 4.

En d'autres termes, la courbe g₃ correspond à la somme des courbes g₁ et g₂.

En référence aux Figures 4 et 5, toujours dans le cadre de cette variante, au cours de l'étape d'éclairage 510, on réalise par exemple l'émission par la source d'éclairage 16 d'une séquence de signaux lumineux présentant alternativement une intensité valant 10% et 30% de l'intensité maximale de la ou les sources lumineuses (partie gauche de la Figure 4).

Toujours dans le même mode de réalisation, ou bien dans un autre mode de réalisation du procédé de datation 50 selon cette variante, au cours de l'étape d'éclairage 510, on réalise l'émission par la source d'éclairage 16 d'une onde de forme sinusoïdale de faible amplitude comparativement à l'intensité attendue du rayonnement du phénomène que l'on souhaite observer et sur laquelle le photomètre auquel sont couplés les moyens d'éclairage 16 est calibré (partie droite de la Figure 4).

De manière connue, la forme sinusoïdale de l'onde induit un écart relatif avec l'intensité attendue qui est facilement mesurable. La connaissance de la forme sinusoïdale, et plus spécifiquement de sa période, permet de constater et corriger un éventuel glissement de la période f lors de l'étape de datation 530.

Dans le cadre de cette variante, pour déterminer une date du phénomène en temps de référence, on mesure l'écart entre cet instant et les extrema locaux e voisins, dont on connaît la date en temps de référence via les fichiers d'événements 38 et d'impulsion 36, et qui sont visualisables sur le diagramme de représentation de l'intensité du rayonnement du phénomène issu des prises de vue du ou des photomètres, comme illustré en Figure 5.

Pour retrouver le signal utile, c'est-à-dire l'intensité du rayonnement du phénomène qui serait observée sans signal lumineux issu de la source d'éclairage 16, on soustrait à la courbe obtenue la valeur de l'intensité du signal des moyens lumineux aux instants considérés, cette valeur de l'intensité en fonction du temps étant également connue.

Cette variante est avantageusement mise en œuvre pour autoriser la datation précise de plusieurs éléments se produisant à divers moments de l'observation du phénomène tout en prévenant les risques d'éblouissement de l'instrument optique 12 du fait de la faible amplitude du signal lumineux émis.

En effet, la réalisation du signal lumineux pendant le phénomène observable, et par conséquent la présence d'extrema locaux de l'éclairage émis dont on détermine facilement la date en temps de référence, permet de bénéficier de points de repère proches pour tout évènement d'intérêt survenant pendant le phénomène observable. Ceci prévient alors la nécessité de compenser un éventuel glissement de la fréquence f.

En variante, le procédé de datation 50 est mis en oeuvre au moyen d'au moins deux dispositifs 10 selon l'invention.

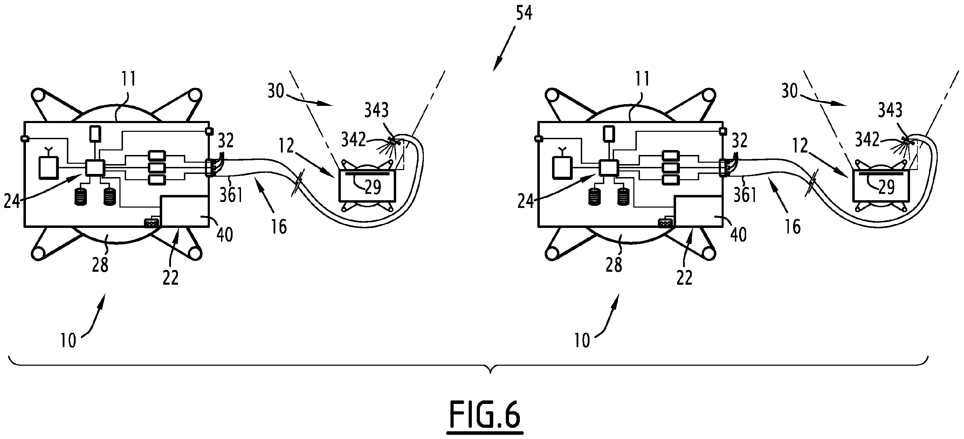

En référence à la Figure 6, les deux dispositifs 10 selon l'invention forment un système de prise de vue 54 selon l'invention.

Cette variante est avantageusement mise en œuvre pour affiner la datation en temps de référence d'un phénomène observable lorsque l'observation est réalisée simultanément à partir de plusieurs dispositifs 10 mais que ceux-ci sont situés à des positions géographiques distinctes.

En effet, de manière connue, l'instant précis d'occurrence d'un phénomène astronomique est variable en fonction de la position géographique terrestre depuis laquelle il est observé, de sorte que la mise en corrélation des prises de vue des différents dispositifs 10 augmente la quantité d'informations disponible pour étudier le phénomène.

Les bases de données d'impulsion 36 et d'événements 38 respectives des deux dispositifs 10 comprennent les mêmes fichiers, c'est-à-dire que lors de l'étape d'éclairage 510, leurs sources d'éclairage 16 respectives émettent exactement la même séquence de signaux lumineux et ce aux mêmes instants en temps de référence.

Ces deux aspects pris en combinaison ont pour effet d'autoriser la mise en correspondance directe des prises de vue respectives des deux dispositifs 10.

A noter que les fréquences f, f' respectives de prises de vue des instruments optiques 12 sont généralement distinctes l'une de l'autre.

En référence aux parties haute (qui correspond aux prises de vue de premier dispositif 10) et basse (qui correspond aux prises de vue du deuxième dispositif 10) de la Figure 3 considérées simultanément, cette différence de fréquence se traduit schématiquement par des dimensions des prises de vue le long de l'axe temporel différentes : les prises de vue du premier dispositif 10 sont moins larges que celles du second dispositif 10.

De même manière que précédemment, suite aux étapes d'éclairage 510 et de prise de vue 520, l'étape de datation 530 a lieu, au cours de laquelle on collecte les prises de vue des dispositifs 10 et on détermine une date en temps de référence pour la ou les prises de vue du premier dispositif 10 sur lesquelles figure le phénomène observable, et on détermine une date en temps de référence pour la ou les prises de vue du deuxième dispositif 10 sur lesquelles figure le phénomène observable.

Par soustraction de ces dates, on obtient l'intervalle de temps en temps de référence qui est intervenu entre l'observation du phénomène à la position géographique du premier dispositif 10 et l'observation du phénomène à la position géographique du deuxième dispositif 10.

Cette variante du procédé selon l'invention permet également de confirmer l'identification des phénomènes observables lorsque le procédé est mis en œuvre pour dater des phénomènes dont les occurrences sont proches et/ou imprévisibles, comme les chutes de météorites.

En référence aux Figures 4 et 5, dans un mode de réalisation particulier de cette variante dans lequel le ou plusieurs des instruments optiques 12 des dispositifs 10 sont des photomètres, lors de l'étape d'éclairage 510, on réalise l'émission d'une séquence de signaux lumineux d'intensité alternant entre deux valeurs données. Ainsi par exemple, comme illustré sur la partie gauche de la Figure 4, on réalise l'émission par les sources d'éclairage 16 d'un signal lumineux d'intensité valant 10% de l'intensité maximale de la source d'éclairage, puis 30% de l'intensité maximale, puis de nouveau 10%.

Ceci est particulièrement avantageux lorsque, toujours au cours de l'étape d'éclairage 510, on réalise également l'émission par les sources d'éclairage 16 d'une onde de forme sinusoïdale.

En effet, la séquence de signaux lumineux de forme triangulaire fonctionne comme une origine temporelle commune aux ondes sinusoïdales émises via les sources d'éclairage 16 respectives des dispositifs 10 qui est facilement identifiable. Cette origine temporelle commune rend plus aisée la mise en correspondance des prises de vue des différents dispositifs 10, notamment du fait qu'elle supprime toute difficulté d'identification du début de la séquence de signaux sur les prises de vue de l'un ou l'autre des dispositifs 10.

Comme on l'aura compris, les caractéristiques décrites précédemment pour un procédé de datation 50 réalisé au moyen d'un seul dispositif 10 peuvent être mises en œuvre dans le cadre du procédé de datation 50 réalisé au moyen de plusieurs dispositifs 10.

Dans un autre mode de réalisation du procédé de datation 50 selon cette variante, l'étape d'éclairage 510 comprend une première et une deuxième sous-étapes 511, 512 réalisées avant, respectivement après l'occurrence attendue du phénomène observable, ce qui permet de compenser la dérive de la fréquence des prises de vue des instruments optiques 12 des dispositifs.

Dans un autre mode de réalisation, l'une des sous-étapes 511, 512 est réalisée pendant l'occurrence du phénomène observable.

Dans un autre mode de réalisation, l'étape d'éclairage 510 débute avant l'étape de prise de vue 520 et prend fin après la fin de cette dernière.

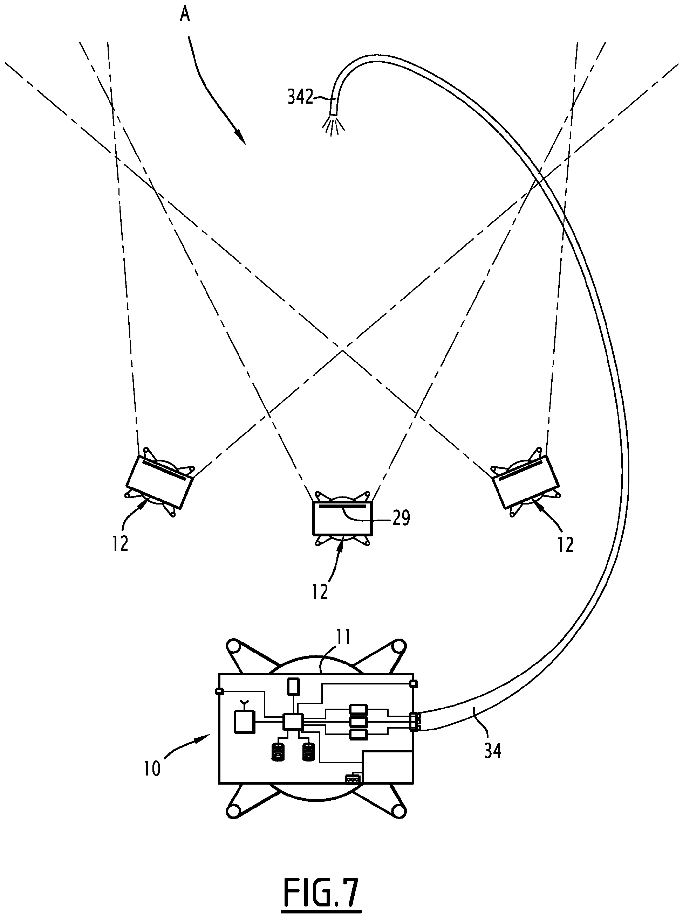

En référence à la Figure 7, une autre variante du procédé de datation 50 va être décrite.

Dans cette variante, le procédé est mis en œuvre via un dispositif 10 comprenant une pluralité d'instruments optiques 12. Cette variante permet de corréler et de déterminer le niveau de synchronisation des temps propres des différents instruments optiques 12 avec le temps de référence.

Outre les étapes précédemment décrites, le procédé 50 comprend une étape préliminaire 509 (en pointillés sur la Figure 2), au cours de laquelle on agence les instruments optiques 12 du dispositif 10 de façon à ce que les différents champs de vue 30 convergent les uns vers les autres et présentent une partie commune A à tous les champs de vue 30.

Toujours au cours de cette étape préliminaire 509, on dispose la deuxième extrémité 342 du guide d'onde 34 dans la partie commune A et on l'oriente en direction des rétines 29 des instruments optiques 12.

Au cours de cette étape préliminaire 509, on dispose les instruments optiques 12 proches les uns des autres, de sorte que les signaux lumineux soient émis par la deuxième extrémité du guide d'onde 34 en direction de la rétine 29 d'au moins l'un des instruments optiques 12, et préférentiellement de tous les instruments optiques 12.

En pratique, on dispose les instruments optiques 12 proches les uns des autres, de sorte que les signaux lumineux soient visualisables sur les prises de vue réalisées par tous les instruments optiques12, par opposition à un cas de figure où les instruments optiques 12 sont régulièrement espacés autour de la partie commune A, auquel cas la deuxième extrémité 342 serait orientée dans une direction opposée aux rétines 29 de plusieurs instruments optiques 12.

En outre, au cours de l'étape d'éclairage 510, un signal lumineux ou une séquence de signaux lumineux sont émis par la source d'éclairage 16 du dispositif 10 dans la partie commune A des champs de vue 30 des rétines 29 des différents instruments optiques, et en direction de ces rétines 29.

L'étape de prise de vue 520 se déroule parallèlement à l'étape d'éclairage 510, c'est-à-dire que les instruments optiques 12 réalisent des prises de vue de leur champ de vue 30 sur lesquelles les signaux lumineux sont visualisables.

Au cours de l'étape de datation 530, à partir des différentes prises de vue réalisées par les instruments optiques 12, on détermine la différence de synchronisation existant entre le temps propre de chacun des instruments optiques 12 avec le temps de référence.

En pratique, pour un instrument optique 12 donné, on considère une prise de vue datée en temps propre de l'instrument optique 12 sur laquelle figure un signal lumineux. La date en temps de référence du signal lumineux et donc de cette prise de vue est connue, ce qui donne la différence de synchronisation entre le temps propre de l'instrument optique et le temps de référence. Cette différence est alors utilisée pour retrouver le temps de référence de chacun des prises de vue réalisées par l'instrument optique 12 ultérieurement.

Cette variante est avantageusement mise en œuvre pour calibrer un nombre quelconque d'instruments optiques 12 au sein d'un dispositif 10 donné, et ce sans nécessiter de raccorder physiquement les instruments optiques entre eux ou à un dispositif de synchronisation quelconque.

En outre, dans la mesure où l'état de synchronisation des différents instruments optiques 12 est déterminé à partir des prises de vue qu'ils réalisent, le biais de synchronisation introduit par le processus interne de prise de vue des instruments optiques 12 est pris en compte, par opposition au cas de figure où cet état est déterminé par accès direct au temps propre de l'horloge de l'instrument optique.

Le procédé 50 et le dispositif 10, ainsi que les différents modes de réalisation et variantes précédents, ont été décrits dans le cadre d'applications astronomiques, mais sont également adaptés pour être mis en œuvre dans d'autres types d'activité, par exemple dans le domaine de la circulation routière ou encore dans le domaine de la surveillance de processus industriels.

En variante, le procédé 50 est mis en œuvre via au moins deux dispositifs 10 respectivement associés à l'un des points d'un parcours donné sur lequel un objet que l'on souhaite observer se déplace. Les champs de vue 30 des instruments optiques 12 des dispositifs sont orientés vers le point du parcours correspondant de sorte que l'objet en question passe dans le champ de vue 30 des instruments optiques 12.

Pour plus de clarté, cette variante va être décrite de façon non limitative dans le cas de deux dispositifs 10, la transposition à un nombre quelconque de dispositifs 10 se faisant sans ambiguïté.

Dans cette variante, au cours de l'étape de prise de vue 520, on réalise des prises de vue sur lesquelles l'objet est situé à l'un et l'autre des points du parcours auxquels sont respectivement situés les deux dispositifs 10.

Au cours de l'étape de datation 530, la date en temps de référence de ces prises de vue est obtenue à partir des prises de vue sur lesquelles des signaux lumineux figurent, comme précédemment décrit.

Puis on détermine l'intervalle de temps en temps de référence qui s'est écoulé entre le passage de l'objet aux points du parcours. Pour ce faire, on fait la différence entre les dates en temps de référence des prises de vue réalisées au cours de l'étape de prise de vue 520 sur lesquelles l'objet en question se trouvent à ces points du parcours.

Cette variante permet notamment d'obtenir une information de précision augmentée portant sur la vitesse moyenne de déplacement d'un objet sur un parcours dont on connaît la longueur.

Ainsi, par exemple, cette variante du procédé est mise en œuvre via deux dispositifs 10 respectivement disposés à l'une et l'autre des extrémités d'un tronçon de route et permet le calcul de la vitesse moyenne d'un véhicule sur le tronçon de route en question. Un premier dispositif 10 permet de dater en temps de référence l'entrée du véhicule sur le tronçon, et un deuxième dispositif 10 permet de dater en temps de référence la sortie du tronçon par le véhicule.

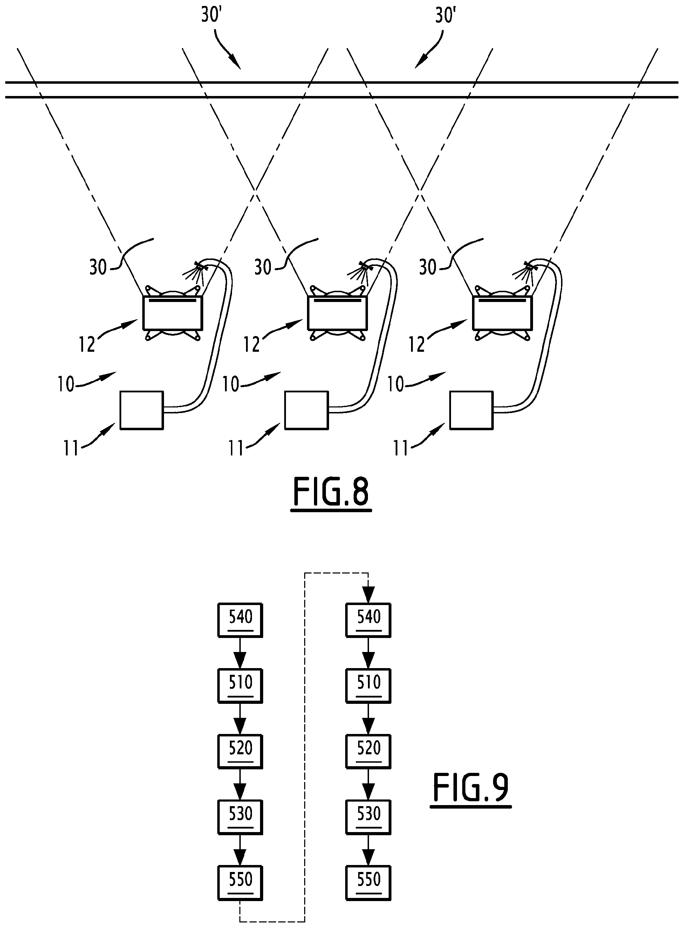

Dans un autre mode de réalisation, en référence à la Figure 8, cette variante est mise en œuvre afin de suivre le déplacement d'un objet sur l'intégralité d'un parcours.

Dans ce mode de réalisation, le procédé 50 est mis en œuvre au moyen de dispositifs 10 dont les moyens optiques 12 respectifs sont orientés en direction du parcours de façon à couvrir chacun une portion du parcours, et de sorte que toute portion du parcours se situe dans le champ de vue 30 d'au moins un instrument optique 12 d'un dispositif 10.

Les champs de vue 30 respectifs de deux instruments optiques 12 respectivement associés à l'une de deux portions de parcours successives présentent un sous-champ de vue 30' commun.

Ceci a pour effet que lorsque l'objet passe d'une portion du parcours à une autre, la continuité de l'observation est assurée dans la mesure où deux sources d'informations au moins sont accessibles.

Cette variante est avantageusement mise en œuvre afin d'obtenir des informations datées en temps de référence et portant aussi bien sur l'intervalle de temps intervenant entre les passages de l'objet entre deux points donnés sur parcours que sur des éléments plus fins que la seule vitesse moyenne de déplacement d'un objet sur ce parcours.

Par exemple, cette variante est mise en œuvre pour étudier la propagation d'une pollution sur un parcours donné le long duquel des dispositifs 10 sont disposés comme décrit précédemment.

Dans une autre variante, en référence à la Figure 8, le procédé 50 est mis en œuvre pour calibrer des instruments optiques 12 situés à des emplacements différents. Pour ce faire, on couple successivement chaque instrument optique 12 avec les éléments complémentaires du dispositif 10, c'est-à-dire un boîtier 11, des moyens de commande 24, une source d'éclairage 16, etc., de façon à former un dispositif 10 selon l'invention.

Plus spécifiquement, le procédé 50 selon cette variante comporte une étape de formation 540 au cours de laquelle on forme un dispositif 10 en couplant un instrument optique 12 avec les éléments complémentaires du dispositif 10, c'est-à-dire un boîtier 11, un récepteur d'un signal d'horloge de référence 14, des moyens de stockage de données 18, des moyens d'alimentation 20 en énergie électrique, une interface externe 22, une sortie auxiliaire 23, des moyens de commande 24 et un pied de stabilisation 28.

En pratique, comme illustré sur la Figure 1, les éléments regroupés autour et dans le boîtier 11 sont adjoints à l'instrument optique 12 pour former le dispositif 10.

Une fois l'étape de formation 540 faite, les étapes d'éclairage 510 et de prise de vue 520 se déroulent comme décrit précédemment au moyen du dispositif 10 ainsi formé. Ensuite, au cours d'une étape de datation 530, on détermine l'écart entre le temps propre de l'instrument optique 12 du dispositif 10 formé à partir des prises de vue réalisées sur lesquelles figure un signal lumineux dont la date en temps de référence est connue. Comme précédemment, cet écart est utilisé pour dater les prises de vue réalisées par les instruments optiques 12 ultérieurement.

Puis, au cours d'une étape de séparation 550, on sépare l'instrument optique 12 des autres éléments du dispositif 10.

Ces étapes sont ensuite successivement répétées pour chaque instrument optique 12 que l'on souhaite calibrer.

Dans un mode de réalisation particulier (non représenté) de cette variante, les étapes de datation 530 sont regroupées en une seule étape de datation 530 postérieure aux autres étapes, et au cours de laquelle on détermine l'écart entre le temps propre des instruments optiques et le temps de référence, et ce pour tous les instruments optiques 12.

Dans d'autres modes de réalisation, le dispositif 10 ne comprend pas de guide d'onde 34. La source d'éclairage 16 disposée à travers le boîtier 11 émet alors les signaux lumineux directement.

Les modes de réalisation et variantes du procédé 50 décrits sont alors mis en œuvre au moyen de cette variante du dispositif 10 en disposant directement le boîtier 11 du ou des dispositifs 10 selon cette variante dans le champ de vue 30 du ou des instruments optiques 12. La source d'éclairage 16 est alors orientée en direction de la rétine 29 du ou des instruments optiques 12 correspondants, de sorte que les signaux lumineux sont bien émis en direction de la rétine 29 du ou des instruments optiques 12 et dans le ou les champs de vue 30 correspondants.

Le moyen de fixation 343 est alors adapté pour recevoir le boîtier 11 directement.

En fonction des modes de réalisation, il peut être solidaire en mouvement d'un instrument optique 12.

Le dispositif 10 selon cette variante comprend moins d'éléments, et est plus léger, moins encombrant et plus facile à manipuler.

Dans le cadre de l'invention, des mesures de précision du dispositif 10 ont été réalisées. Ces mesures ont porté à la fois :
- sur un premier écart temporel entre d'une part le signal délivré par la sortie auxiliaire 23 une fois les moyens de commande 24 synchronisés avec un temps de référence, par exemple le temps GPS, et d'autre part un signal horaire de référence représentatif du temps de référence en question, et
- sur un deuxième écart temporel entre le signal lumineux émis par le dispositif 10 et le signal délivré par la sortie auxiliaire 23.

Le premier écart temporel est représentatif de l'écart entre le temps de l'horloge interne des moyens de commande 24 et le temps de référence. Le deuxième écart temporel est représentatif d'une imprécision intrinsèque du dispositif 10.

La valeur moyenne du premier écart temporel obtenue vaut sensiblement 10 microsecondes avec un écart type valant 0,4 microseconde.

La valeur moyenne du deuxième écart temporel obtenue vaut 5 microsecondes.

En conséquence, la précision du dispositif 10 par rapport au temps de référence a été mesurée comme entachée d'un biais d'environ 15 microsecondes et présente un écart type inférieur à 0,5 microseconde.

## Revendications

1. Dispositif de chrono-datation optique, comprenant :
- un instrument optique (12) ayant une rétine (29) présentant un champ de vue (30) et étant propre à réaliser sur la rétine (29) des prises de vue dudit champ de vue (30), et
- un récepteur (14) d'un signal d'horloge de référence, le récepteur (14) étant propre à recevoir des informations d'un temps de référence ;
**caractérisé en ce que** le dispositif de chrono-datation (10) comprend également :
- une source d'éclairage (16) distante de la rétine de l'instrument optique (12) et configurée pour émettre un signal lumineux en direction de la rétine (29) de l'instrument optique (12) et dans le champ de vue (30) de l'instrument optique (12), et
- des moyens de commande (24), comportant une horloge interne, et étant raccordés au récepteur d'un signal d'horloge de référence (14) au moyen d'une première connexion (231) et à la source d'éclairage (16) au moyen d'une seconde connexion (232), et étant configurés pour :
- cycliquement synchroniser leur horloge interne avec le temps de référence ;
- commander la source d'éclairage (16) pour l'émission d'un signal lumineux de façon synchronisée avec le signal d'horloge de référence.

2. Dispositif de chrono-datation selon la revendication 1, **caractérisé en ce qu'**il comprend également un boîtier (11) dans lequel sont intégrés au moins le récepteur d'un signal d'horloge de référence (14) et les moyens de commande (24).

3. Dispositif de chrono-datation selon la revendication 2, **caractérisé en ce que** le boîtier (11) est indépendant électriquement de l'instrument optique (12) et/ou est solidaire en mouvement de l'instrument optique (12).

4. Dispositif de chrono-datation selon l'une quelconque des revendications précédentes, **caractérisé en ce que** le signal lumineux de la source d'éclairage (16) est réglable en intensité et/ou en longueur d'onde et/ou en largeur d'impulsion.

5. Dispositif de chrono-datation selon la revendication 4, **caractérisé en ce qu'**il comprend également une base de données d'impulsions (182) propre à stocker une pluralité de fichiers d'impulsion (36), chaque fichier d'impulsion (36) comprenant une pluralité de commandes d'impulsion comprenant chacune au moins des paramètres d'intensité, de longueur d'onde et/ou de largeur d'impulsion du signal lumineux de la source d'éclairage (16).

6. Dispositif de chrono-datation selon la revendication 5, **caractérisé en ce qu'**il comprend également une base de données d'événements (183) propre à stocker une pluralité de fichiers d'événements (38), chaque fichier d'événements (38) comprenant une ou plusieurs trames comprenant chacune une date d'événement, un nom de fichier d'impulsion (36), et un nombre d'itérations dudit fichier d'impulsion (36).

7. Dispositif de chrono-datation selon la revendication 6, **caractérisé en ce que** les moyens de commande (24) sont programmés pour lire lesdits fichiers d'événement (38), et pour chacune des trames d'un fichier d'événement (38), commander, à la date d'événement en temps de référence et un nombre de fois égal au nombre d'itérations dudit fichier d'impulsion (36) figurant dans ladite trame, l'émission par la source d'éclairage (16) d'une séquence de signaux lumineux d'intensité, de longueur d'onde et de largeur d'impulsion correspondant aux paramètres d'intensité, de longueur d'onde et/ou de largeur d'impulsion que comprennent les commandes d'impulsion successives comprises dans le fichier d'impulsion (36) dont le nom se trouve dans la trame du fichier d'événement (38).

8. Dispositif de chrono-datation selon l'une quelconque des revendications précédentes, **caractérisé en ce que** qu'il comprend également une sortie auxiliaire (23) propre à délivrer un signal de niveau logique haut lorsque les moyens de commande (24) réalisent la commande de la source d'éclairage (16), et de niveau logique bas dans le cas contraire.

9. Dispositif de chrono-datation selon l'une quelconque des revendications précédentes, **caractérisé en ce qu'**il comprend au moins deux instruments optiques (12) distincts, la source d'éclairage (16) étant configurée pour émettre un signal lumineux en direction de l'un au moins des instruments optiques (12) et dans l'un au moins des champs de vue (30) respectifs des instruments optiques (12).

10. Dispositif de chrono-datation selon l'une quelconque des revendications précédentes, **caractérisé en ce que** le ou chaque instrument optique (12) est un des éléments de l'ensemble formé par: une caméra pour l'observation du domaine visible, une caméra infrarouge, un photomètre.

11. Système de prise de vues, **caractérisé en ce qu'**il comprend au moins deux dispositifs de chrono-datation optiques (10) selon l'une quelconque des revendications 1 à 10.

12. Procédé de chrono-datation optique mis en œuvre au moyen d'au moins un dispositif de chrono-datation optique selon l'une quelconque des revendications 1 à 10, le procédé comprenant :
- une étape d'éclairage (510), au cours de laquelle la source d'éclairage (16) du ou de chaque dispositif de chrono-datation (10) émet au moins un signal lumineux en direction de la rétine (29) de l'un au moins des instruments optiques (12) correspondants et dans le champ de vue (30) du ou des instruments optiques (12) correspondants, le ou chaque signal lumineux étant synchronisé avec le temps de référence,
- une étape de prise de vue (520) se déroulant au moins en partie pendant l'étape d'éclairage (510), au cours de laquelle le ou chaque instrument optique (12) du ou de chaque dispositif de chrono-datation (10) réalise des prises de vue de leur champ de vue (30) sur lesquelles le au moins un signal lumineux est visualisable, et
- une étape de datation (530), au cours de laquelle on détermine une date en temps de référence de prises de vue réalisées par le ou chaque dispositif de chrono-datation (10).

13. Procédé de chrono-datation selon la revendication 12 mis en oeuvre au moyen d'un dispositif de chrono-datation selon la revendication 9, **caractérisé en ce qu'**il comporte également une étape préliminaire (509) au cours de laquelle on agence les instruments optiques (12) du dispositif (10) de façon à ce que les champs de vue (30) des instruments optiques (12) présentent une partie commune (A) à tous les champs de vue (30), et **en ce qu'**au cours de l'étape d'éclairage (510), la source d'éclairage émet au moins un signal lumineux dans ladite partie commune (A) en direction des rétines (29) respectives des instruments optiques (12).

14. Procédé de chrono-datation selon la revendication 12 ou 13, réalisé au moyen d'au moins un dispositif de chrono-datation (10) selon la revendication 7, **caractérisé en ce qu'**au cours de l'étape de prise de vue (520), le champ de vue (30) du ou de chaque instrument optique (12) est orienté vers un phénomène observable, et **en ce qu'**au cours de l'étape de datation (530), on détermine la date en temps de référence du phénomène observable à partir de la longueur d'onde et/ou de l'intensité du ou des signaux lumineux issus de la source d'éclairage (16) du ou de chaque dispositif de chrono-datation (10) et visualisables sur les prises de vue correspondantes.

15. Procédé de chrono-datation selon l'une des revendications 12 à 14, mis en œuvre au moyen d'au moins deux dispositifs de chrono-datation (10) respectivement associés à au moins l'un des points d'un parcours sur lequel un objet se déplace, **caractérisé en ce qu'**au cours de l'étape de prise de vue (520), on réalise des prises de vue sur lesquelles l'objet se situe aux points auxquels sont associés les dispositifs de chrono-datation (10), et **en ce qu'**au cours de l'étape de datation (530) on détermine au moins, en temps de référence, l'intervalle de temps intervenu entre les passages de l'objet auxdits points du parcours.

16. Procédé de chrono-datation selon l'une des revendications 12 à 15 mis en oeuvre au moyen d'au moins deux dispositifs de chrono-datation (10) selon la revendication 7, les bases de données desdits au moins deux dispositifs de chrono-datation (10) comprenant les mêmes fichiers d'événements (38) et les mêmes fichiers d'impulsion (36), **caractérisé en ce qu'**au cours de l'étape de datation (530), on collecte les prises de vue des au moins deux dispositifs de chrono-datation (10) et on met en correspondance les prises de vue des au moins deux dispositifs de chrono-datation (10) à partir des différences entre les longueurs d'onde et/ou les intensités des signaux lumineux visualisables sur les prises de vue respectives des au moins deux dispositifs de chrono-datation (10).

## Patentansprüche

1. Vorrichtung für optische Zeitstempelung, umfassend:
- ein optisches Instrument (12), das eine Retina (29) aufweist, das ein Sichtfeld (30) präsentiert, und imstande ist, auf der Retina (29) Bildaufnahmen des Sichtfeldes (30) zu realisieren, und
- einen Empfänger (14) eines Referenztaktsignals, wobei der Empfänger (14) imstande ist, Informationen einer Referenzzeit zu empfangen;
**dadurch gekennzeichnet, dass** die Vorrichtung zur Zeitstempelung (10) ebenfalls umfasst:
- eine Beleuchtungsquelle (16), die von der Retina des optischen Instruments (12) entfernt ist und konfiguriert ist, um ein Leuchtsignal in Richtung der Retina (29) des optischen Instruments (12) und in dem Sichtfeld (30) des optischen Instruments (12) auszugeben, und
- Steuerungsmittel (24), die eine innere Taktrate beinhalten und anhand einer ersten Verbindung (231) an den Empfänger des Referenztaktsignals (14) angeschlossen sind, und anhand einer zweiten Verbindung (232) an die Beleuchtungsquelle (16) angeschlossen sind, und konfiguriert sind zum:
- zyklischen Synchronisieren ihrer internen Taktrate mit der Referenzzeit;
- Steuern der Beleuchtungsquelle (16) zur Ausgabe eines Leuchtsignals in synchronisierter Form mit dem Referenztaktsignal.

2. Vorrichtung zur Zeitstempelung nach Anspruch 1, **dadurch gekennzeichnet, dass** sie ebenfalls ein Gehäuse (11) umfasst, in dem mindestens der Empfänger (14) eines Referenztaktsignals und die Steuerungsmittel (24) integriert sind.

3. Vorrichtung zur Zeitstempelung nach Anspruch 2, **dadurch gekennzeichnet, dass** das Gehäuse (11) elektrisch von dem optischen Instrument (12) unabhängig ist und/oder mit dem optischen Instrument (12) bewegungsverbunden ist.

4. Vorrichtung zur Zeitstempelung nach einem der vorstehenden Ansprüche, **dadurch gekennzeichnet, dass** Leuchtsignal der Beleuchtungsquelle (16) in der Stärke und/oder in der Wellenlänge und/oder in der Impulsbreite einstellbar ist.

5. Vorrichtung zur Zeitstempelung nach Anspruch 4, **dadurch gekennzeichnet, dass** sie ebenfalls eine Impulsdatenbank (182) umfasst, die imstande ist, eine Vielzahl von Impulsdateien (36) zu speichern, wobei jede Impulsdatei (36) eine Vielzahl von Impulssteuerungen umfasst, die jeweils mindestens Stärke-, Wellenlängen- und/oder Impulsbreitenparameter des Leuchtsignals der Beleuchtungsquelle (16) umfassen.

6. Vorrichtung zur Zeitstempelung nach Anspruch 5, **dadurch gekennzeichnet, dass** sie ebenfalls eine Ereignisdatenbank (183) umfasst, die imstande ist, eine Vielzahl von Ereignisdateien (38) zu speichern, wobei jede Ereignisdatei (38) ein oder mehrere Raster umfasst, die jeweils ein Ereignisdatum, einen Impulsdateinamen (36), und eine Anzahl an Iterationen der Impulsdatei (36) umfassen.

7. Vorrichtung zur Zeitstempelung nach Anspruch 6, **dadurch gekennzeichnet, dass** die Steuerungsmittel (24) programmiert sind, um die Ereignisdateien (38) zu lesen, und für jedes der Raster einer Ereignisdatei (38) zum Ereignisdatum in Referenzzeit und eine Anzahl an Malen gleich der Anzahl an Iterationen der Impulsdatei (36), die in dem Raster aufgeführt ist, das Ausgeben, durch die Beleuchtungsquelle (16), einer Sequenz von Leuchtsignalen mit einer Stärke, einer Wellenlänge und einer Impulsbreite zu steuern, die den Stärkeparametern entsprechen, mit einer Wellenlänge und/oder Impulsbreite, die die aufeinanderfolgenden Impulssteuerungen in der Impulsdatei (36) umfassen, deren Name sich in dem Raster der Ereignisdatei (38) befindet.

8. Vorrichtung zur Zeitstempelung nach einem der vorstehenden Ansprüche, **dadurch gekennzeichnet, dass** sie ebenfalls einen Hilfsausgang (23) umfasst, der imstande ist, ein Signal mit einem hohen Logikpegel abzugeben, wenn die Steuerungsmittel (24) die Steuerung der Beleuchtungsquelle (16) ausführen, und mit einem niedrigen Logikpegel im gegenteiligen Fall.

9. Vorrichtung zur Zeitstempelung nach einem der vorstehenden Ansprüche, **dadurch gekennzeichnet, dass** sie mindestens zwei verschiedene optische Instrumente (12) umfasst, wobei die Beleuchtungsquelle (16) konfiguriert ist, um ein Leuchtsignal in Richtung des mindestens einen der optischen Instrumente (12) und in mindestens einem der jeweiligen Sichtfelder (30) der optischen Instrumente (12) auszugeben.

10. Vorrichtung zur Zeitstempelung nach einem der vorstehenden Ansprüche, **dadurch gekennzeichnet, dass** das oder jedes optische Instrument (12) eines der Elemente der Baugruppe ist, die gebildet wird aus: einer Kamera zur Beobachtung des sichtbaren Bereichs, einer Infrarotkamera, einem Lichtmesser.

11. Bildaufnahmesystem, **dadurch gekennzeichnet, dass** es mindestens zwei Vorrichtungen für optische Zeitstempelung (10) nach einem der Ansprüche 1 bis 10 umfasst.

12. Verfahren für optische Zeitstempelung, das anhand mindestens einer Vorrichtung zur optischen Zeitstempelung nach einem der Ansprüche 1 bis 10 umgesetzt wird, wobei das Verfahren umfasst:
- einen Beleuchtungsschritt (510), im Laufe dessen die Beleuchtungsquelle (16) der oder jeder Vorrichtung zur Zeitstempelung (10) mindestens ein Leuchtsignal in Richtung der Retina (29) des mindestens einen der entsprechenden optischen Instrumente (12) und in dem Sichtfeld (30) des oder der entsprechenden optischen Instrumente (12) ausgibt, wobei das oder jedes Leichtsignal mit der Referenzzeit synchronisiert ist,
- einen Bildaufnahmeschritt (520), der mindestens teilweise während des Beleuchtungsschritts (510) abläuft, im Laufe dessen das oder jedes optische Instrument (12) der oder jeder Vorrichtung zur Zeitstempelung (10) Bildaufnahmen seines Sichtfeldes (30) realisiert, auf denen das mindestens eine Leuchtsignal visualisierbar ist, und
- einen Datierungsschritt (530), im Laufe dessen ein Datum in Referenzzeit von durch die oder jede Vorrichtung zur Zeitstempelung (10) realisierten Bildaufnahmen bestimmt wird.

13. Verfahren für optische Zeitstempelung nach Anspruch 12, das anhand einer Vorrichtung zur Zeitstempelung nach Anspruch 9 umgesetzt wird, **dadurch gekennzeichnet, dass** es ebenfalls einen vorbereitenden Schritt (509) umfasst, im Laufe dessen die optischen Instrumente (12) der Vorrichtung (10) derart angeordnet werden, dass die Sichtfelder (30) der optischen Instrumente (12) einen gemeinsamen Teil (A) aller Sichtfelder (30) präsentieren, und dadurch, dass die Beleuchtungsquelle im Laufe des Beleuchtungsschrittes (510) mindestens ein Leuchtsignal in dem gemeinsamen Teil (A) in Richtung der jeweiligen Retinae (29) der optischen Instrumente (12) ausgibt.

14. Verfahren für Zeitstempelung nach Anspruch 12 oder 13, das anhand mindestens einer Vorrichtung zur Zeitstempelung (10) nach Anspruch 7 umgesetzt wird, **dadurch gekennzeichnet, dass** das Sichtfeld (30) des oder jedes optischen Instruments (12) im Laufe des Bildaufnahmeschrittes (520) zu einem beobachtbaren Phänomen ausgerichtet ist, und dadurch, dass im Laufe des Datierungsschrittes (530) das Datum in Referenzzeit des beobachtbaren Phänomens aus der Wellenlänge und/oder der Stärke des oder der Leuchtsignale, die aus der Beleuchtungsquelle (16) der oder jeder Vorrichtung zur Zeitstempelung(10) stammen, und auf den entsprechenden Bildaufnahmen visualisierbar sind, bestimmt wird.

15. Verfahren für Zeitstempelung nach einem der Ansprüche 12 bis 14, das anhand mindestens zweier Vorrichtungen zur Zeitstempelung (10) umgesetzt wird, die jeweils mindestens einem der Punkte eines Parcours, auf dem sich ein Objekt bewegt, zugewiesen sind, **dadurch gekennzeichnet, dass** im Laufe des Bildaufnahmeschrittes (520) Bildaufnahmen realisiert werden, auf denen sich das Objekt an den Punkten befindet, denen die Vorrichtungen zur Zeitstempelung (10) zugewiesen sind, und dadurch, dass im Laufe des Datierungsschrittes (530) mindestens in Referenzzeit das Zeitintervall bestimmt wird, das zwischen den Durchläufen des Objekts an den Punkten des Parcours erfolgt ist.

16. Verfahren für Zeitstempelung nach einem der Ansprüche 12 bis 15, das anhand mindestens zweier Vorrichtungen zur Zeitstempelung (10) nach Anspruch 7 umgesetzt wird, wobei die Datenbanken der mindestens zwei Vorrichtungen zur Zeitstempelung (10) dieselben Ereignisdateien (38) und dieselben Impulsdateien (36) umfassen, **dadurch gekennzeichnet, dass** im Laufe des Datierungsschrittes (530) Bildaufnahmen der mindestens zwei Vorrichtungen zur Zeitstempelung (10) gesammelt werden, und die Bildaufnahmen der mindestens zwei Vorrichtungen zur Zeitstempelung (10) ausgehend von den Unterschieden zwischen den Wellenlängen und/oder den Stärken der visualisierbaren Leuchtsignale in den jeweiligen Bildaufnahmen der mindestens zwei Vorrichtungen zur Zeitstempelung (10) abgeglichen werden.

## Claims

1. An optical time-stamping device (10), comprising:
- an optical instrument (12) having a retina (29) having a field of view (30) and being suitable for shooting said field of view (30) on the retina (29), and
- a receiver (14) of a reference clock signal, the receiver (14) being suitable for receiving information of a reference time;
**characterized in that** the time-stamping device (10) also comprises:
- an illumination source (16) remote from the retina of the optical instrument (12) and configured to emit a light signal in the direction of the retina (29) of the optical instrument (12) and in the field of view (30) of the optical instrument (12), and
- control means (24), including an internal clock, and being connected to the receiver of a reference clock signal (14) by means of a first connection (231) and to the illumination source (16) by means of a second connection (232), and being configured to:
- cyclically synchronize their internal clock with the reference time;
- control the illumination source (16) for the emission of a light signal synchronized with the reference clock signal.

2. The time-stamping device according to claim 1, **characterized in that** it also comprises a casing (11) in which at least the receiver of a reference clock signal (14) and the control means (24) are integrated.

3. The time-stamping device according to claim 2, **characterized in that** the casing (11) is electrically independent of the optical instrument (12) and/or is integral in movement with the optical instrument (12).

4. The time-stamping device according to any one of the preceding claims, **characterized in that** the light signal of the illumination source (16) is adjustable in intensity and/or in wavelength and/or in pulse width.

5. The time-stamping device according to claim 4, **characterized in that** it also comprises a pulse database (182) suitable for storing a plurality of pulse files (36), each pulse file (36) comprising a plurality of pulse commands each comprising at least intensity, wavelength and/or pulse width parameters of the light signal from the light source (16).

6. The time-stamping device according to claim 5, **characterized in that** it also comprises an event database (183) suitable for storing a plurality of event files (38), each event file (38) comprising one or several frame(s) each comprising an event date, a pulse file name (36), and a number of iterations of said pulse file (36).

7. The time-stamping device according to claim 6, **characterized in that** the control means (24) are programmed to read said event files (38), and for each of the frames of an event file (38), control, on the event date-stamp in reference time and a number of times equal to the number of iterations of said pulse file (36) in said frame, the emission by the illumination source (16) of a sequence of intensity, wavelength and pulse width light signals corresponding to the intensity, wavelength and/or pulse width parameters that comprise the successive pulse commands comprised in the pulse file (36) whose name is in the frame of the event file (38).

8. The time-stamping device according to any one of the preceding claims, **characterized in that** it also comprises an auxiliary output (23) suitable for delivering a signal of high logic level when the control means (24) carry out the control of the light source (16), and of low logic level in the opposite case.

9. The time-stamping device according to any one of the preceding claims, **characterized in that** it comprises at least two distinct optical instruments (12), the illumination source (16) being configured to emit a light signal in the direction of at least one of the optical instruments (12) and in at least one of the respective fields of view (30) of the optical instruments (12).

10. The time-stamping device according to any one of the preceding claims, **characterized in that** the or each optical instrument (12) is one of the elements of the set formed by: a camera for observing the visible domain, an infrared camera, a photometer.

11. A shooting system, **characterized in that** it comprises at least two optical time-stamping devices (10) according to any one of claims 1 to 10.

12. An optical time-stamping method implemented by means of at least one optical time-stamping device according to any one of claims 1 to 10, the method comprising:
- an illuminating step (510), during which the illumination source (16) of the or each time-stamping device (10) emits at least one light signal in the direction of the retina (29) of at least one of the corresponding optical instruments (12) and in the field of view (30) of the corresponding optical instrument(s) (12), the or each light signal being synchronized with time reference,
- a shooting step (520) taking place at least in part during the illuminating step (510), during which the or each optical instrument (12) of the or each time-stamping device (10) shoots their field of view (30) on which the at least one light signal can be viewed, and
- a date-stamping step (530), during which a date-stamp in reference time of the shots, taken by the or each time-stamping device (10), is determined.

13. A time-stamping method according to claim 12 implemented by means of a time-stamping device according to claim 9, **characterized in that** it also includes a preliminary step (509) during which the optical instruments (12) of the device (10) are arranged so that the fields of view (30) of the optical instruments (12) have a portion (A) common to all fields of view (30), and **in that** during the illuminating step (510), the illumination source emits at least one light signal in said common portion (A) in the direction of the respective retinas (29) of the optical instruments (12).

14. A time-stamping method according to claim 12 or 13, carried out by means of at least one time-stamping device (10) according to claim 7, **characterized in that** during the shooting step (520), the field of view (30) of the or each optical instrument (12) is oriented towards an observable phenomenon, and **in that** during the date-stamping step (530), the date-stamp in reference time of the observable phenomenon is determined from the wavelength and/or the intensity of the light signal(s) derived from the illumination source (16) of the or each time-stamping device (10) and viewable on the corresponding shots.

15. A time-stamping method according to any of claims 12 to 14, implemented by means of at least two time-stamping devices (10) respectively associated to at least one of the points of a course on which an object is displaced, **characterized in that** during the shooting step (520), shots, on which the object is located at the points to which the time-stamping devices are associated (10), are taken, and **in that** during the date-stamping step (530), at least the time interval, between the passages of the object at said points of the course, is determined in reference time.

16. A time-stamping method according to any of claims 12 to 15 implemented by means of at least two time-stamping devices (10) according to claim 7, the databases of said at least two time-stamping devices (10) comprising the same event files (38) and the same pulse files (36), **characterized in that** during the date-stamping step (530), the shots of the at least two time-stamping devices (10) are collected and the shots of the at least two time-stamping devices (10) are matched from the differences between the wavelengths and/or the intensities of the light signals viewable on the respective shots of the at least two time-stamping devices (10).
